# EUROPÄISCHE PATENTSCHRIFT

(11) **EP 0 470 986 B1**
(45) Veröffentlichungstag und Bekanntmachung des Hinweises auf die Patenterteilung: **01.09.1993**
(21) Anmeldenummer: 90906968.4
(22) Anmeldetag: 03.05.1990
(51) Int. Cl.: B60L 5/20

(54) **SCHLEIFSTÜCK FÜR STROMABNEHMER**
PANTOGRAPH SLIPPER FOR CURRENT COLLECTORS
SEMELLE D'ARCHET DE PANTOGRAPHE

(30) Priorität: 03.05.1989 DE 3914675
(43) Veröffentlichungstag der Anmeldung: 19.02.1992
(73) Patentinhaber: HOFFMANN & CO. ELEKTROKOHLE GESELLSCHAFT M.B.H., A-4823 Steeg (AT); ABB Daimler-Benz Transportation (Deutschland) GmbH, 16761 Hennigsdorf (DE)
(72) Erfinder: BARTELS, Sven, D-7778 Markdorf (DE); HÖLL, Johann, A- 4830 Hallstatt (AT)
(74) Vertreter: Glawe, Delfs, Moll & Partner
(86) Internationale Anmeldenummer: EP9000711
(87) Internationale Veröffentlichungsnummer: WO9013453

(56) Entgegenhaltungen:
- WO-A-89/11408
- US-A- 2 029 857

## Beschreibung

Die Erfindung betrifft ein Schleifstück für Stromabnehmer von der im Oberbegriff des Anspruchs 1 angegebenen Art. Ein derartiges Schleifstück ist aus der US-A-2 029 857 und der EP-A-0 000 980 bekannt. Die seitlichen Auflaufhörner des Trägers,die mit dem Träger einstückig, oder auch getrennt von diesem ausgebildet sein können, haben die Aufgabe, einen seitlich einlaufenden Fahrdraht aufzufangen und auf die Oberseite der Kohleschleifleiste zu führen. Den Auflaufhörnern kommt jedoch keine Stromübertragungsfunktion zu.

Es hat sich gezeigt, daß die Auflaufhörner im modernen Fahrbetrieb wegen des häufigen Fahrdrahtwechsels einer starken Beanspruchung und einem starken Verschleiß unterliegen. Auch wenn sie aus einem verschleißfesten Material wie Stahl bestehen oder mit verschleißmindernden Metallauflagen versehen werden, besteht das Problem, daß metallisches Material von den Auflaufhörnern durch den Fahrdraht auf die Kohleschleifleiste mitgeschleppt werden kann. Auch kann sich durch unterschiedliche Abnutzung am Übergang zwischen den Auflaufhörnern und der Kohleschleifleiste eine Stufe ausbilden, die das einwandfreie Führen des Fahrdrahtes beeinträchtigt und zu starken dynamischen Belastungen des Stromabnehmers führen kann.

Der Erfindung liegt die Aufgabe zugrunde, ein Schleifstück der genannten Art so auszubilden, daß die Auflaufhörner verschleißgeschützt sind und das Betriebsverhalten beim Führen des Fahrdrahtes über die Auflaufhörner verbessert wird.

Die erfindungsgemäße Lösung der Aufgabe ist im Anspruch 1 angegeben. Die Merkmale der Unteransprüche bilden die erfindungsgemäße Lösung weiter.

Eine Ausführungsform der Erfindung wird anhand der Zeichnungen näher erläutert. Es zeigt:
Fig. 1 eine schematische Seitenansicht des erfindungsgemäßen Schleifstücks;
Fig. 2 und 3 Querschnitte durch das Schleifstück entlang den Linien II-II und III-III von Fig. 1;
Fig. 4 einen Längsschnitt durch das Schleifstück an der Stelle IV von Fig. 1.

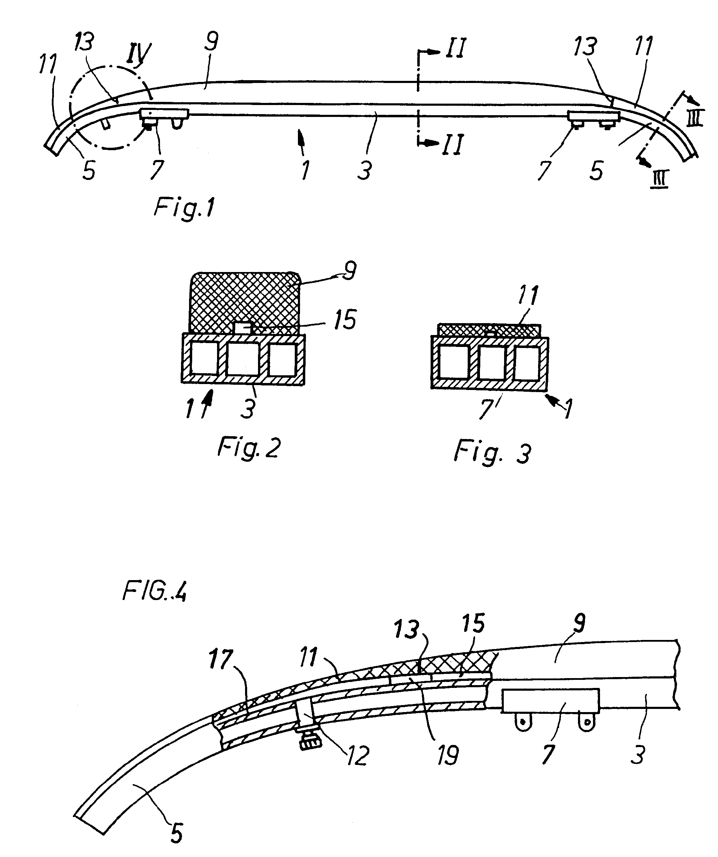

Gemäß Fig. 1 weist das Schleifstück einen Träger 1 auf, der vorzugsweise einstückig aus einem Profil aus Stahl,Aluminium oder auch Kunststoff, insbesondere faserverstärktem Kunststoff, bestehen kann. Der Träger 1 hat einen geradlinigen oder nur sehr schwach gekrümmten Mittelteil 3 und an jedem Ende ein gekrümmtes Auflaufhorn 5. An der Unterseite des Trägers 1 sind Anschlußteile 7 zur Befestigung des Schleifstücks am Pantographen des Stromabnehmers sowie zur Anbringung der elektrischen Anschlüsse vorgesehen.

Auf der Oberseite des Trägers 1 ist eine Schleifleiste 9 aus Kohlewerkstoff aufgeklebt, die sich über die Länge des Mittelteils 3 des Trägers 1 erstreckt. Auf jedem Auflaufhorn 5 ist eine Auflage 11 ebenfalls aus Kohlewerkstoff aufgeklebt, welches eine geringere Höhe als die Schleifleiste 9 aufweiset. Die Schleifleiste 9 und die Auflagen 11 sind bei dieser Ausführungsform als getrennte Teile ausgebildet, schließen aber lückenlos aneinander an, wobei die Fuge 13 zwischen ihnen, vorzugsweise verklebt ist. In Richtung auf die Fuge 13 nimmt die Höhe jeder Auflage 11 zu und eventuell die Höhe der Schleifleiste 9 ab, derart, daß ein stetiger Übergang an der Außenseite zwischen diesen Teilen geformt wird.

In an sich bekannter Weise kann das Schleifstück mit einer Bruchdetektoreinrichtung versehen sein. Zu diesem Zweck weist die Schleifleiste 9 einen gasdichten Kanal 15 auf, der an eine Einrichtung zum Erzeugen eines erhöhten Luft-oder Gasdruckes in dem Kanal 15 und an einen einen Druckabfall signalisierenden Detektor angeschlossen ist. Die Wandungen des Kanals 15 können auf drei Seiten unmittelbar von dem Material der Kohleleiste oder einer darauf galvanisch aufgebrachten Metallschicht, wie Kupfer, gebildet sein, während die vierte, untere Wand von dem Träger 3 oder ebenfalls einer, den Kanal 15 überbrückenden galvanischen Kupferschicht gebildet wird. Bei einem Bruch oder bei übermäßiger Abnutzung der Schleifleiste 9 wird der Kanal 15 undicht, und durch den Druckabfall wird der Bruch oder der Verschleiß angezeigt. Gemäß Fig. 4 sind in diese Bruchüberwachung auch die erfindungsgemäß vorgesehenen Auflagen 11 auf den Auflaufhörnern 5 einbezogen. Auch diese haben einen entsprechenden Kanal 17, der über ein eingesetztes, die Fuge 13 überbrückendes Schlauchstück 19 mit dem Kanal 15 der Kohlenleiste 9 verbunden ist. Der Anschluß an die Gaszufuhr und die Überwachungseinrichtung kann über einen Anschlußnippel 12 im Bereich eines der Auflaufhörner 5 erfolgen.

Abweichend von der dargestellten Ausführungsform können im Rahmen der Erfindung die Auflagen 11 der Auflaufhörner 5 auch einstückig mit der Schleifleiste 9 hergestellt sein.

Gemäß Fig. 1 und 3 hat jede Auflage 11 über den größten Teil der Länge des Auflaufhorns 5 eine konstante Höhe bzw. Dichte und nur in dem der Fuge 13 benachbarten Bereich eine kontinuierlich zunehmende Höhe. Alternativ kann jede Auflage 11 auch über ihre gesamte Länge eine kontinuierlich zunehmende Höhe aufweisen.

## Patentansprüche

1. Schleifstück für Stromabnehmer mit einem Träger (1), der ein Mittelteil (3) und beiderseits daran anschließende, gekrümmte oder abgewinkelte Auflaufhörner (5) aufweist, einer auf dem Mittelteil (3) des Trägers angeordneten Schleifleiste (9) aus Kohlematerial und auf jedem Auflaufhorn (5) des Trägers angeordneten Auflagen (11) aus Kohlematerial, dadurch **gekennzeichnet**, daß die Schleifleiste (9) und die Auflagen (11) mit dem Träger (1) verklebt sind und die Fuge (13) zwischen jeder Auflage (11) und der Schleifleiste (9) ebenfalls verklebt ist, daß jede Auflage (11) einstückig und mit geringerer Dicke als die Schleifleiste (9) ausgebildet ist und daß jede Auflage (11) mit in Richtung auf die Schleifleiste (9) zunehmender Dicke ausgebildet ist und mit ihrer Außenkontur stetig in die Außenkontur der Schleifleiste (9) übergeht.

2. Schleifstück nach Anspruch 1, dadurch **gekennzeichnet**, daß es mit einer Bruchdetektoreinrichtung versehen ist und einen Druckkanal (15) aufweist, der in der Schleifleiste (9) und in den Auflagen (11) der Auflaufhörner in Längsrichtung verlaufend ausgebildet ist und an eine Einrichtung zur Zuführung eines Gases unter Druck und an einen einen Druckabfall anzeigenden Detektor anschließbar ist.

## Claims

1. A Pantograph slipper for current collectors comprising a carrier (1) having a center section (3) and curved or angled guiding horns (5) at both ends thereof, a sliding strip (9) made of carbon attached to the center section of the carrier and a carbon layer (11) on each guiding horn (5), characterized in that the sliding strip (9) and the carbon layers (11) are cemented to carrier (1) and the joint (13) between each layer (11) and the sliding strip is also cemented, in that each carbon layer (11) is formed of a single piece and has a smaller thickness than the sliding strip (9), and in that each carbon layer (11) has a thickness which increases in the direction of the sliding strip (9) so that its outer contour forms a smooth, gradual transition with the outer contour of sliding strip (9).

2. Pantograph slipper according to claim 1 , characterized in that it has a rupture detection device and a pressure channel (15) extending longitudinally within sliding strip (9) and carbon layers (11) of the guiding horns, and which can be connected to a source of pressurized gas and a detector which signals pressure drops.

## Revendications

1. Semelle d'archet de pantographe ayant un support (1), qui présente une partie centrale (3) se prolongeant des deux côtés par des cornes d'archet (5) recourbées ou coudées, une barre d'archet (9) disposée sur la partie centrale (3) du support et constituée d'un matériau à base de charbon, et des pièces d'appui (11) disposées sur chaque corne d'archet (5) du support et constituées d'un matériau à base de charbon, caractérisée en ce que la barre d'archet (9) et les pièces d'appui (11) sont collées au support (1), et en ce que les jointures (13) entre chaque pièce d'appui (11) et la barre d'archet (9) sont également collées, en ce que chaque pièce d'appui (11) est en un seul morceau, et formée avec une épaisseur plus petite que celle de la barre d'archet (9), et en ce que chaque pièce d'appui (11) présente une épaisseur croissante dans la direction de la barre d'archet (9), et des contours extérieurs qui épousent les contours extérieurs de la barre d'archet (9) qui est ainsi maintenue solidement.

2. Semelle d'archet selon la revendication 1, caractérisée en ce qu'elle présente un dispositif de détection de rupture et un conduit de fluide sous pression qui s'étend longitudinalement dans la barre d'archet (9) et dans les pièces d'appui (11) des cornes d'archet, ce conduit pouvant être relié à un dispositif d'alimentation en un gaz sous pression et à un détecteur de baisse de pression.
